# DEMANDE DE BREVET EUROPEEN

(11) **EP 3 196 008 A1**
(43) Date de publication de la demande: **26.07.2017**
(21) Numéro de dépôt: 16152610.8
(22) Date de dépôt: 25.01.2016
(51) Int. Cl.: B32B 5/02, B32B 11/10, B32B 27/12, B32B 27/18, B32B 27/20, B32B 27/32, B32B 27/36, E04D 5/10, D06N 5/00

(54) **MEMBRANE D'ETANCHEITE POUR TOITURE**

(71) Demandeur: S.A. Imperbel N.V., 1651 Lot (BE)
(72) Inventeur: VERDEBOUT, Renaud, 5030 GEMBLOUX (BE); FRANSSEN, Damien, 5310 MEHAIGNE (BE); AERTS, Hans, 1731 ZELLIK (BE)
(74) Mandataire: Gevers Patents

(57) **Abrégé**

Membrane d'étanchéité pour toiture comprenant une couche supérieure en matière polymère, une couche inférieure d'étanchéité étant agencée pour recouvrir une toiture, et une armature disposée entre ladite couche supérieure et ladite couche inférieure, caractérisée en ce que ladite matière polymère est bi-orientée.

## Description

La présente invention se rapporte à une membrane d'étanchéité pour toiture.

Une membrane d'étanchéité connue comprend typiquement une couche supérieure en matière polymère qui est agencée pour réfléchir des rayons UV, une couche inférieure d'étanchéité qui est agencée pour recouvrir une toiture, et une armature disposée entre ladite couche supérieure et ladite couche inférieure.

Le document WO 2004/070107 divulgue une membrane bitumineuse qui comprend une armature munie sur une première face d'une masse bitumineuse et sur une deuxième face d'un mélange constitué d'un polymère acrylique et de dioxyde de titane (TiO₂).

Lorsque la membrane réfléchissante est appliquée, par exemple sur une toiture d'un immeuble, la couche comprenant le mélange constitué du polymère acrylique et du TiO₂ permet de protéger la membrane des rayons UV. La fonction de cette couche est donc de former une barrière contre les rayons UV pour que ces derniers ne puissent pas entrer en contact avec la masse bitumineuse présente sur la première face de l'armature.

La membrane réfléchissante est obtenue en appliquant directement le mélange constitué d'un polymère acrylique et de TiO₂ sur la deuxième face de l'armature, lequel est ensuite séché lors de la mise en oeuvre de la membrane qui est amenée au niveau du bain de bitume où la première face de l'armature peut être imprégnée de bitume. Ensuite, la membrane est à nouveau séchée pour obtenir un produit final.

Malheureusement, lors de l'application du mélange précité sur la deuxième face de l'armature, le mélange constitué du polymère acrylique et de TiO₂ peut présenter une viscosité qui varie, ce qui peut conduire à la sédimentation d'une partie des constituants du mélange qui n'est dès lors pas assez homogène. La dispersion du TiO₂ ne peut dès lors plus être garantie dans la membrane. Par conséquent, la réflectivité de la membrane décroît au cours du temps la rendant ainsi moins efficace lorsque celle-ci recouvre la toiture d'une habitation ou d'un bâtiment.

Plus précisément, la couche protectrice qui comprend le polymère acrylique et le TiO₂ qui n'est pas suffisamment dispersé dans le mélange ne joue alors plus son rôle de barrière contre le passage des rayons UV.

Le fait que la membrane n'est plus apte à réfléchir les rayons UV du soleil, ces rayons UV peuvent ainsi plus facilement atteindre la masse bitumineuse de la membrane ce qui conduit à de la pollution environnementale.

Plus précisément, lorsque les rayons UV entrent en contact avec la masse bitumineuse et l'huile qu'elle contient, l'huile remonte en surface de la membrane. Ce phénomène d'exsudation lié à la migration d'huile en surface de la membrane provoque de la pollution environnementale, lorsque l'eau de pluie se mélange à cette huile qui n'est plus contenue dans la masse bitumineuse.

Il existe donc un besoin de fournir une membrane d'étanchéité dont la durée de vie est prolongée et qui réduit le risque lié au phénomène d'exsudation.

L'invention a ainsi pour but de pallier les inconvénients de l'état de la technique en procurant une membrane d'étanchéité pour toiture qui présente une durée de vie prolongée par rapport aux membranes connues et qui diminue considérablement le risque lié au phénomène d'exsudation.

Pour résoudre ce problème, il est prévu suivant l'invention une membrane d'étanchéité pour toiture telle qu'indiquée au début caractérisée en ce que ladite matière polymère est bi-orientée.

L'utilisation d'une matière polymère bi-orientée permet de conférer à la membrane d'étanchéité des propriétés avantageuses, notamment en termes de performances mécaniques, , de résistance chimique, de protection aux rayons UV et de réflectivité.

Un autre avantage réside également dans le fait que l'huile pouvant être contenue dans la couche inférieure d'étanchéité puisse être maintenue dans cette couche durant la durée de vie de la membrane afin d'éviter toute migration d'huile suite au phénomène d'exsudation précité. Ceci constitue un réel avantage en ce que l'impact environnemental de la membrane d'étanchéité selon l'invention est considérablement réduit.

Une caractéristique avantageuse additionnelle réside dans le fait que la couche supérieure en une matière polymère bi-orientée permet d'améliorer l'adhésion entre celle-ci et les autres couches formant la membrane d'étanchéité selon l'invention.

Ainsi, lorsque la membrane d'étanchéité selon la présente invention est posée sur une toiture, une éventuelle stagnation de la membrane sous eau peut avoir lieu. Dans ce cas de figure, il a été constaté que l'utilisation de la couche supérieure susmentionnée permet d'avoir une membrane d'étanchéité dont les couches adhèrent suffisamment les unes aux autres ce qui permet d'éviter une délamination de la membrane.

La durée de vie de la membrane selon l'invention est ainsi garantie au cours du temps même en cas de stagnation sous eau grâce à la cohésion de l'ensemble des couches formant la membrane d'étanchéité selon l'invention.

De plus, il a été constaté que la membrane d'étanchéité selon l'invention présente une durée de vie prolongée par rapport aux membranes existantes. En effet, le dépôt d'algues ou de bactéries et la croissance de champignons ou de lichens sur la membrane sont considérablement réduits grâce à la membrane d'étanchéité qui présente une surface suffisamment lisse.

Par ailleurs, l'entretien de ces membranes d'étanchéité sensiblement lisses en surface est facilité ce qui est particulièrement avantageux pour l'utilisateur.

Avantageusement, ladite matière polymère bi-orientée est choisie dans le groupe constitué du polypropylène, du polyester et de leurs mélanges.

Dans une forme de réalisation particulière, ladite couche supérieure en une matière polymère bi-orientée est un multicouches de polyester bi-orienté.

De préférence, ledit polyester est choisi dans le groupe constitué du poly(téréphtalate d'éthylène) (PET), du poly(naphtalate d'éthylène) (PEN) et du poly(téréphtalate de butylène) (PBT) et de leurs mélanges.

De manière particulièrement préférée, ledit multicouches de polyester bi-orienté comprend un pigment choisi dans le groupe constitué du dioxyde de titane (TiO₂), du sulfate de baryum, du carbonate de calcium et de leurs mélanges.

Dans une forme de réalisation particulièrement avantageuse du dispositif selon l'invention, ledit multicouches de polyester bi-orienté comprend une première couche externe, une deuxième couche externe, reliées l'une à l'autre par une couche centrale.

De plus, dans une forme de réalisation particulière, ladite couche centrale comprend du TiO₂ dans une quantité comprise entre 0,1-40 % en poids, de préférence entre 0,5-30 % en poids, plus préférentiellement entre 0,6-0,75 % en poids, plus préférentiellement encore entre 0,65-0,75 % en poids, par rapport au poids total de la couche centrale.

De préférence, ladite première couche externe et/ou ladite deuxième couche externe comprend du TiO₂ dans une quantité inférieure à 5 % en poids, de préférence inférieure à 4 % en poids, plus préférentiellement comprise entre 0,01-3 % en poids, par rapport au poids total de la première couche externe et/ou de la deuxième couche externe.

Plus préférentiellement, ladite première couche externe et/ou ladite deuxième couche externe comprend du PET.

Selon un mode de réalisation avantageux, ledit PET présente un poids moléculaire moyen en nombre compris dans la plage allant de 18500-40000, de préférence allant de 19000-35000, plus préférentiellement allant de 20000-30000.

De manière avantageuse, ledit PET présente des groupements carboxyles en une quantité inférieure ou égale à 30 eq/T, de préférence inférieure ou égale à 25 eq/T, plus préférentiellement inférieure ou égale à 21 eq/T, plus préférentiellement encore inférieure ou égale à 15 eq/T, avantageusement compris entre 5-15 eq/T.

Dans un mode particulièrement préféré, ladite première couche externe et/ou ladite deuxième couche externe comprend un agent stabilisateur de lumière pour absorber les rayons UV et réduire l'effet de l'oxygène sur la membrane d'étanchéité, ledit agent étant choisi dans le groupe constitué d'antioxydants, de benzophénones, de benzotriazoles, de benzoxazinones, de triazines, une triazine présentant 2 groupements phényles ou 2 groupements bi-phényles et de leurs mélanges.

Selon un exemple de réalisation particulièrement préféré, ladite couche supérieure en une matière polymère présente une épaisseur comprise entre 3 et 500 µm, avantageusement entre 10 et 350 µm; 50 et 200 µm, de préférence entre 80 et 190 µm, plus préférentiellement entre 180 et 190 µm.

De préférence, la membrane selon l'invention est une membrane réfléchissante. De manière avantageuse, la couche inférieure d'étanchéité est une couche à base de bitume, de préférence un bitume modifié avec un polymère ou à base d'un liant végétal ou à base d'un mélange de bitume, de préférence un bitume modifié avec un polymère et d'un liant végétal.

La couche inférieure peut préférentiellement être une couche à base d'un liant végétal qui confère également un caractère étanche à la membrane.

D'autres formes de réalisation de la membrane suivant l'invention sont indiquées dans les revendications annexées.

L'invention a aussi pour objet un procédé de fabrication d'une membrane d'étanchéité, ledit procédé comprenant les étapes suivantes :
- mise à disposition d'une armature présentant une première face et une deuxième face,
- application d'une couche inférieure d'étanchéité sur ladite première face de ladite armature,
- application d'une couche supérieure faite en une matière polymère bi-orientée sur ladite deuxième face de ladite armature.

De préférence, ladite étape d'application de ladite couche supérieure faite en une matière polymère bi-orienté consiste à coller ladite couche supérieure susvisée sur ladite deuxième face de ladite armature.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.

La membrane d'étanchéité selon la présente invention peut être utilisée pour recouvrir une toiture d'une immeuble ou d'une habitation.

La membrane d'étanchéité selon la présente invention peut également être utilisée pour recouvrir une façade d'une habitation ou d'un immeuble.

La membrane d'étanchéité selon la présente invention peut en outre être utilisée pour récupérer les eaux de pluie. Comme expliqué ci-avant, le phénomène d'exsudation est réduit ce qui permet d'éviter la migration d'huile jusqu'à la surface de la membrane. Ainsi, l'eau de pluie n'entre pas en contact avec les huiles qui restent logées dans la couche inférieure d'étanchéité.

La récupération d'eau de pluie est donc rendue facilitée ce qui constitue un réel avantage de la membrane d'étanchéité selon la présente invention.

De plus, le placement d'une série de membranes d'étanchéité selon la présente invention sur une toiture d'une habitation peut consister à superposer une première membrane à une deuxième membrane en superposant la première extrémité de la couche inférieure d'étanchéité de la première membrane sur la première extrémité de la couche supérieure en matière polymère bi-orientée de la deuxième membrane.

Lors du placement, il a été constaté que la couche inférieure d'étanchéité fusionne avec la couche supérieure en matière polymère bi-orientée ce qui permet de fournir une membrane totalement étanche, de préférence à l'eau.

En effet, la cohésion entre la couche inférieure de la première membrane et la couche supérieure de la deuxième membrane est garantie au cours du temps ainsi qu'entre les couches qui forment les membranes d'étanchéité selon la présente invention.

De plus, la membrane selon l'invention résiste à l'eau ce qui est particulièrement avantageux lorsqu'elle recouvre une toiture.

Selon un premier mode de réalisation, le procédé de fabrication de la membrane d'étanchéité selon l'invention consiste à faire dérouler une armature présentant une première face et une deuxième face et à appliquer, de préférence par collage, une couche supérieure, éventuellement réfléchissante, en une matière polymère bi-orientée sur la deuxième face de l'armature. L'adhésion entre la couche supérieure et la deuxième face de l'armature peut être réalisée par laminage.

L'armature munie de la couche supérieure est ensuite amenée vers un bain comprenant une composition à base de bitume ou à base d'un liant végétal de façon à imprégner la première face de l'armature de ladite composition à base de bitume ou à base d'un liant végétal. Ensuite, la membrane peut être séchée.

Selon un deuxième mode de réalisation, le procédé de fabrication de la membrane d'étanchéité selon l'invention consiste à faire dérouler, de préférence en continu, une armature présentant une première face et une deuxième face et à l'amener vers un bain comprenant une composition à base de bitume ou à base d'un liant végétal de façon à imprégner la première face de l'armature de ladite composition à base de bitume ou à base d'un liant végétal. Ensuite, la membrane peut être séchée.

Ensuite, une couche supérieure, éventuellement réfléchissante, en une matière polymère bi-orientée est appliquée sur la deuxième face de l'armature munie de la couche inférieure d'étanchéité précitée.

Cette application peut consister à coller la couche supérieure sur la deuxième face de l'armature. L'adhésion entre la couche supérieure et la deuxième face de l'armature peut aussi être réalisée par laminage.

Selon un troisième mode de réalisation, le procédé de fabrication de la membrane d'étanchéité selon l'invention consiste à faire dérouler une armature présentant une première face et une deuxième face en continu et à l'amener l'armature vers un bain comprenant une composition à base de bitume ou à base d'un liant végétal de façon à imprégner la première face de l'armature de ladite composition à base de bitume ou à base d'un liant végétal. De cette façon, la deuxième face de l'armature peut également être recouverte de ladite composition à base de bitume ou à base d'un liant végétal. Ensuite, une couche supérieure, éventuellement réfléchissante, en une matière polymère bi-orientée est appliquée sur la deuxième face de l'armature. L'adhésion entre la couche supérieure et la deuxième face de l'armature étant obtenue grâce à la présence de la composition à base de bitume ou à base du liant végétal.

Un procédé d'application d'une masse bitumineuse sur une armature est décrit dans le document WO97/24485, lequel est incorporé par référence dans le cadre du procédé d'application d'une composition à base de bitume sur une face d'une armature.

La membrane ainsi obtenue en fin de cycle de fabrication peut être coupée et éventuellement enroulée sous forme de bobine.

Une lamineuse statique ou fonctionnant en continu peut être utilisée pour fabriquer la membrane d'étanchéité selon la présente invention au moyen des techniques connues par l'homme de métier.

La lamineuse peut avantageusement être choisie parmi la gamme KFK fournie par la société Meyer (Maschinenfabrik Herbert Meyer GmbH), en particulier les dispositifs dénommés KFK-V, KFK-X, KFK-E

L'armature selon la présente invention peut avantageusement être un voile de verre ou une nappe de fibres, de préférence en polyester, plus préférentiellement en polyester tissé ou non-tissé.

La couche supérieure en matière polymère bi-orientée est avantageusement transparente ou de couleur, de préférence blanche ou grise.

Elle peut être fabriquée par le procédé décrit dans la demande WO 2012/104668, laquelle est incorporée par référence à la présente invention.

La couche supérieure en matière polymère bi-orientée peut présenter une épaisseur comprise entre 3 et 500 µm, avantageusement entre 10 et 350 µm; 50 et 200 µm, de préférence entre 80 et 190 µm, plus préférentiellement entre 180 et 190 µm.

De plus la couche supérieure en matière polymère bi-orientée peut comprendre un retardateur de flamme.

De manière préférée, la couche supérieure en matière polymère bi-orientée comprend un piégeur de radicaux.

La couche supérieure en matière polymère bi-orientée est avantageusement munie d'au moins un revêtement sur au moins une de ses faces. Ce revêtement peut être obtenu par coextrusion, par un procédé de revêtement, par une méthode d'enduction par extrusion laminage, au moyen d'un traitement corona sous air ambiant ou gaz, par évaporation sous vide, par un traitement plasma ou par un dépôt sous vide physicochimique. De manière préférentielle, le revêtement présent sur au moins une des deux faces est obtenu par l'application d'un traitement de surface chimique, par exemple à l'aide d'un procédé de revêtement qui fait appel à une composition à base de polyuréthane, de polyester, de copolyesters ou d'acrylique.

Un tel revêtement est décrit dans le document WO 2012/104668 et est ainsi incorporé par référence dans la présente invention.

Selon un mode de réalisation préféré, la couche supérieure en matière polymère bi-orientée est un monocouche ou un multi-couches de polyester.

Les couches de polyester formant le multicouches de la couche supérieure en matière polymère bi-orientée peuvent par exemple être des polyesters aromatiques linéaires, obtenus à partir d'un acide dibasique aromatique ou d'un ester dérivé dudit acide, et également à partir d'un diol ou à partir d'un ester dérivé dudit diol.

Des polyesters aromatiques sont décrits dans la demande WO 2012/104668 et sont incorporés par référence à la présente invention.

Avantageusement, le polyester constituant le multicouches précité peut être choisi dans le groupe constitué des polyesters connus pour pouvoir former des couches semi-cristallines bi-orientées.

Le multicouches de polyester bi-orienté selon la présente invention peut par exemple contenir du PET ou des copolyesters de PET contenant des unités de diméthylol cyclohéxyle à la place d'unités d'éthylène ou leurs mélanges ou encore de copolyesters de PET avec une partie de polyester présentant des unités isophtalate ou leurs mélanges.

Il est bien entendu que le multicouches de polyester bi-orienté selon la présente invention peut présenter plusieurs couches de nature identique ou différente.

De manière avantageuse, le PET selon la présente invention peut présenter une résistance à hydraulise avec une valeur de viscosité intrinsèque élevée pouvant être supérieure à 0,78 dL/g, mesuré selon la méthode décrite dans le document WO 2012 104 668, lequel est incorporé par référence à la présente invention. De plus, la quantité de groupement carboxylique est faible et peut être inférieure à 15 eq/T, mesuré selon la méthode décrite dans le document WO 2012 104 668, lequel est incorporé par référence à la présente invention. Ce type de PET présente de préférence un poids moléculaire moyen en nombre compris entre 18500 et 40000, mesuré selon la méthode décrite dans le document WO 2012 104 668, lequel est incorporé par référence à la présente invention .

Selon un mode préféré de la présente invention, le multicouches de polyester bi-orienté comprend un agent stabilisateur de lumière. L'agent stabilisateur de lumière est par exemple au moins un des agents décrits dans la demande WO 2012 104 668, lesquels sont incorporés par référence à la présente invention.

De manière préférée, le multicouches de polyester bi-orienté peut comprendre au moins 3 couches de polyester, respectivement une première couche externe, une deuxième couche externe, reliées l'une à l'autre par une couche centrale.

La première couche externe et la deuxième couche externe peuvent être faites dans la même matière ou dans une matière distincte.

Au moins une des 3 couches précitées comprend du PET qui peut notamment présenter les caractéristiques qui ont été mentionnées ci-avant.

De manière préférée, la première couche externe et/ou la deuxième couche externe comprend du PET.

Le PET utilisé dans le cadre de la présente invention peut présenter un poids moléculaire moyen en nombre compris dans la plage allant de 18500-40000, de préférence allant de 19000-35000, plus préférentiellement allant de 20000-30000, déterminé selon la méthode de mesure décrite dans le document WO 2012104668.

De plus, selon un mode particulièrement préféré, le PET selon la présente invention comprend des groupements carboxyle en une quantité inférieure ou égale à 30 eq/T, de préférence inférieure ou égale à 25 eq/T, plus préférentiellement inférieure ou égale à 21 eq/T, plus préférentiellement encore inférieure ou égale à 15 eq/T, avantageusement compris entre 5-15 eq/T, déterminée selon la méthode de mesure décrite dans le document WO 201204668.

Le multicouches de polyester bi-orienté peut comprendre un pigment choisi dans le groupe constitué du TiO₂, du sulfate de baryum, du carbonate de calcium et de leurs mélanges de façon à ce que la membrane puisse réfléchir les rayons UV du soleil.

La couche centrale peut comprendre du TiO₂ dans une quantité comprise entre 0,1-40 % en poids, de préférence entre 0,5-30 % en poids, plus préférentiellement entre 0,6-0,75 % en poids, plus préférentiellement encore entre 0,65-0,75 % en poids.

La première couche externe et/ou ladite deuxième couche externe peut comprend du TiO₂ dans une quantité inférieure à 5 % en poids, de préférence inférieure à 4 % en poids, plus préférentiellement comprise entre 0,01-3 % en poids.

Le procédé de fabrication du multicouches de polyester bi-orienté comprenant au moins 3 couches de polyester est, de préférence, celui décrit dans la demande WO 2012/104668.

La couche inférieure d'étanchéité à base de bitume est, de préférence du bitume modifié avec un polymère pouvant être sélectionné dans le groupe constitué du polypropylène atactique (APP), du poly(styrène-butadiène-styrène) (SBS), du polystyrène-b-poly(éthylène-butylène)-b-polystyrène (SEBS), du polystyrène-b-poly(éthylène-propylène)-b-polystyrène (SEPS), du diméthyle-gamma-butyrolactone acrylate (DBA), du styrène-isoprène-styrène (SIS), de l'ethylène-vinyle acétate (EVA), du polypropylène isotactique (IPP), du polypropylène syndiotactique (SPP) et leurs mélanges.

Alternativement, la couche inférieure d'étanchéité peut être à base d'un liant végétal, tel que le produit commercial nommé DERBIPURE disponible auprès de la firme Imperbel.

Plus préférentiellement, la couche inférieure d'étanchéité peut être à base d'un liant végétal modifié ou non modifié avec un polymère.

Plus préférentiellement encore, la couche inférieure d'étanchéité peut être à base d'un liant végétal modifié avec un polymère choisi dans le groupe constitué du polypropylène atactique (APP), du poly(styrène-butadiène-styrène) (SBS), du polystyrène-b-poly(éthylène-butylène)-b-polystyrène (SEBS), du polystyrène-b-poly(éthylène-propylène)-b-polystyrène (SEPS), du diméthyle-gamma-butyrolactone acrylate (DBA), du styrène-isoprène-styrène (SIS), de l'ethylène-vinyle acétate (EVA), du polypropylène isotactique (IPP), du polypropylène syndiotactique (SPP) et leurs mélanges.

La couche inférieure à base de bitume ou à base d'un liant végétal peut comprendre de l'huile.

La membrane d'étanchéité selon la présente invention peut avantageusement comprendre une charge, autre que le TiO₂, choisie dans le groupe constitué du carbonate de calcium, de l'oxyde de calcium, de l'oxyde d'aluminium, de kaolinite, de silice, d'oxyde de zinc, de carbone noir, de carbure de silicium, d'oxyde d'étain, de particules de résine acrylique réticulée, de particules de résine de polystyrène réticulé, de particules de résine de mélanine réticulé, de particules de résine de silicone réticulé et de leurs mélanges.

De plus, la membrane d'étanchéité selon la présente invention peut également comprendre un additif tel qu'un piégeur de radicaux, un retardateur de flamme, un antioxydant, une huile organique, un catalyseur ou tout autre additif équivalent.

Dans le cadre de la présente invention, la membrane d'étanchéité peut être recyclée ce qui constitue un réel avantage par rapport aux membranes connues.

La membrane selon l'invention peut avantageusement réfléchir et/ou bloquer et/ou absorber les rayons UV.

### Exemple 1

Une couche supérieure en matière polymère bi-orientée est constituée de trois couches de polyester, respectivement une première couche externe en PET, une deuxième couche externe en PET, reliées l'une à l'autre par une couche centrale constituée de PET et de TiO₂ formant ainsi un multicouches de polyester bi-orienté.

Une armature en polyester comprend une première face et une deuxième face qui est munie du multicouches de polyester bi-orienté susdit. La première face de l'armature est imprégnée d'une couche inférieure à base de bitume modifié avec de l'APP. Cela permet de former une membrane réfléchissante selon la présente invention.

La nature de l'armature n'est pas limitée à celle citée dans le présent exemple et peut donc avantageusement être un voile de verre ou une nappe de fibres, de préférence en polyester tissé ou non-tissé.

La couche inférieure à base de bitume est de préférence réalisée à l'aide d'une composition de bitume modifié avec un polymère choisi dans le groupe constitué du polypropylène atactique (APP), du poly(styrène-butadiène-styrène) (SBS), du polystyrène-b-poly(éthylène-butylène)-b-polystyrène (SEBS), du polystyrène-b-poly(éthylène-propylène)-b-polystyrène (SEPS), du diméthyle-gamma-butyrolactone acrylate (DBA), du styrène-isoprène-styrène (SIS), de l'ethylène-vinyle acétate (EVA), du polypropylène isotactique (IPP), du polypropylène syndiotactique (SPP) et leurs mélanges.

De manière alternative, la couche inférieure d'étanchéité peut être à base d'un liant végétal.

### Exemple 2

Une couche supérieure en matière polymère bi-orientée est constituée de trois couches de polyester, respectivement une première couche externe constitué de PET et de TiO₂, une deuxième couche externe en PET, reliées l'une à l'autre par une couche centrale constituée de PET et de TiO₂ formant ainsi un multicouches de polyester bi-orienté.

Une armature en polyester comprend une première face et une deuxième face qui est munie du multicouches de polyester bi-orienté susdit. La première face de l'armature est imprégnée d'une couche inférieure à base de bitume modifié avec de l'APP. Cela permet d'obtenir une membrane d'étanchéité réfléchissante selon la présente invention.

La nature de l'armature n'est pas limitée à celle citée dans le présent exemple et peut donc avantageusement être un voile de verre ou une nappe de fibres, de préférence en polyester tissé ou non-tissé.

La couche inférieure à base de bitume est de préférence réalisée à l'aide d'une composition de bitume modifié pouvant également être sélectionné dans le groupe de composés cités à l'exemple 1.

De manière alternative, la couche inférieure d'étanchéité peut également être à base d'un liant végétal.

### Exemple 3

Une couche supérieure en matière polymère bi-orientée est constituée de trois couches de polyester, respectivement une première couche externe constitué de PET et de TiO₂, une deuxième couche externe constitué de PET et de TiO₂, reliées l'une à l'autre par une couche centrale constituée de PET et de TiO₂ formant ainsi un multicouches de polyester bi-orienté.

Une armature en polyester comprend une première face et une deuxième face qui est munie du multicouches de polyester bi-orienté susdit. La première face de l'armature est imprégnée d'une couche inférieure à base de bitume modifié avec de l'APP. Cela permet d'obtenir une membrane réfléchissante selon la présente invention.

La nature de l'armature n'est pas limitée à celle citée dans le présent exemple et peut donc avantageusement être un voile de verre ou une nappe de fibres, de préférence en polyester tissé ou non-tissé.

La couche à base de bitume est de préférence réalisée à l'aide d'une composition de bitume modifié pouvant également être sélectionné dans le groupe de composés cités à l'exemple 1.

### Exemple 4

Une couche supérieure en matière polymère bi-orientée est constituée de trois couches de polyester, respectivement une première couche externe constitué de PET, une deuxième couche externe en PET, reliées l'une à l'autre par une couche centrale constituée de PET formant ainsi un multicouches de polyester bi-orienté.

Une armature en polyester comprend une première face et une deuxième face qui est munie du multicouches de polyester bi-orienté susdit. La première face de l'armature est imprégnée d'une couche inférieure à base de bitume modifié avec de l'APP. Cela permet d'obtenir une membrane d'étanchéité réfléchissante selon la présente invention.

La nature de l'armature n'est pas limitée à celle citée dans le présent exemple et peut donc avantageusement être un voile de verre ou une nappe de fibres, de préférence en polyester tissé ou non-tissé.

La couche inférieure à base de bitume est de préférence réalisée à l'aide d'une composition de bitume modifié pouvant également être sélectionné dans le groupe de composés cités à l'exemple 1.

De manière alternative, la couche inférieure d'étanchéité peut également être à base d'un liant végétal.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Membrane d'étanchéité pour toiture comprenant :
- une couche supérieure en matière polymère étant agencée pour réfléchir des rayons UV ,
- une couche inférieure d'étanchéité étant agencée pour recouvrir une toiture, et
- une armature disposée entre ladite couche supérieure et ladite couche inférieure,
**caractérisée en ce que** ladite matière polymère est bi-orientée.

2. Membrane selon la revendication 1, dans laquelle ladite matière polymère bi-orientée est choisie dans le groupe constitué du polypropylène, du polyester et de leurs mélanges.

3. Membrane selon la revendication 1 ou 2, dans laquelle ladite couche supérieure en matière polymère bi-orientée est un multicouches de polyester bi-orienté.

4. Membrane selon la revendication 3, dans laquelle ledit polyester est choisi dans le groupe constitué du poly(téréphtalate d'éthylène) (PET), du poly(naphtalate d'éthylène) (PEN) et du poly(téréphtalate de butylène) (PBT) et de leurs mélanges.

5. Membrane selon la revendication 3 ou 4, dans laquelle ledit multicouches de polyester bi-orienté comprend un pigment choisi dans le groupe constitué du dioxyde de titane (TiO₂), du sulfate de baryum, du carbonate de calcium et de leurs mélanges.

6. Membrane selon l'une quelconque des revendications 3 à 5, dans laquelle ledit multicouches de polyester bi-orienté comprend une première couche externe, une deuxième couche externe, reliées l'une à l'autre par une couche centrale.

7. Membrane selon la revendication 6, dans laquelle ladite couche centrale comprend du TiO₂ dans une quantité comprise entre 0,1-40 % en poids, de préférence entre 0,5-30 % en poids, plus préférentiellement entre 0,6-0,75 % en poids, plus préférentiellement encore entre 0,65-0,75 % en poids, par rapport au poids total de la couche centrale.

8. Membrane selon la revendication 6 ou 7, dans laquelle ladite première couche externe et/ou ladite deuxième couche externe comprend du TiO₂ dans une quantité inférieure à 5 % en poids, de préférence inférieure à 4 % en poids, plus préférentiellement comprise entre 0,01-3 % en poids, par rapport au poids total de ladite première couche externe et/ou de ladite deuxième couche externe.

9. Membrane selon l'une quelconque des revendications 6 à 8, dans laquelle ladite première couche externe et/ou ladite deuxième couche externe comprend du PET.

10. Membrane selon l'une quelconque des revendications 4 à 9, dans laquelle ledit PET présente un poids moléculaire moyen en nombre compris dans la plage allant de 18500-40000, de préférence allant de 19000-35000, plus préférentiellement allant de 20000-30000.

11. Membrane selon l'une quelconque des revendications 4 à 10, dans laquelle ledit PET présente des groupements carboxyles en une quantité inférieure ou égale à 30 eq/T, de préférence inférieure ou égale à 25 eq/T, plus préférentiellement inférieure ou égale à 21 eq/T, plus préférentiellement encore inférieure ou égale à 15 eq/T, avantageusement compris entre 5-15 eq/T.

12. Membrane selon l'une quelconque des revendications 6 à 11, dans laquelle ladite première couche externe et/ou ladite deuxième couche externe comprend un agent stabilisateur de lumière pour absorber les rayons UV et réduire l'effet de l'oxygène sur la membrane d'étanchéité, ledit agent étant choisi dans le groupe constitué d'antioxydants, de benzophénones, de benzotriazoles, de benzoxazinones, de triazines, une triazine présentant 2 groupements phényles ou 2 groupements bi-phényles et de leurs mélanges.

13. Membrane selon l'une quelconque des revendications précédentes, dans laquelle ladite couche supérieure en matière polymère bi-orientée présente une épaisseur comprise entre 3 et 500 µm, avantageusement entre 10 et 350 µm; 50 et 200 µm, de préférence entre 80 et 190 µm, plus préférentiellement entre 180 et 190 µm.

14. Membrane selon l'une quelconque des revendications précédentes, **caractérisée en ce que** ladite membrane est réfléchissante.

15. Procédé de fabrication d'une membrane d'étanchéité selon l'une quelconque des revendications précédentes comprenant les étapes suivantes :
- mise à disposition d'une armature présentant une première face et une deuxième face,
- application d'une couche inférieure d'étanchéité sur ladite première face de ladite armature,
- application d'une couche supérieure faite en une matière polymère bi-orientée sur ladite deuxième face de ladite armature.
